# EUROPÄISCHE PATENTSCHRIFT

(11) **EP 3 037 245 B1**
(45) Veröffentlichungstag und Bekanntmachung des Hinweises auf die Patenterteilung: **02.05.2018**
(21) Anmeldenummer: 14199840.1
(22) Anmeldetag: 22.12.2014
(51) Int. Cl.: B29C 63/04

(54) **Vorrichtung und Verfahren zum Umbugen**
Method and device for edgefolding
Dispositif et procédé de rembordement

(43) Veröffentlichungstag der Anmeldung: 29.06.2016
(73) Patentinhaber: Dr. Stoffel, Kai Konstantin, 6020 Innsbruck (AT)
(72) Erfinder: Stoffel, Kai Konstantin, Dr., 6020 Innsbruck (AT); Peimpolt, Markus, Ing., 6020 Innsbruck (AT)
(74) Vertreter: Wunderlich & Heim Patentanwälte Partnerschaftsgesellschaft mbB

(56) Entgegenhaltungen:
- DE-A1-102009 025 539
- DE-A1-102013 201 921
- FR-A1- 2 595 622

## Beschreibung

Die Erfindung betrifft zum einen eine Vorrichtung zum Umbugen einer überstehenden flexiblen Dekorschicht an einem Werkstück, mit einer Halterung zum Aufnehmen und Halten des Werkstücks, mindestens einem Umbugstempel, welcher zum Umbugen der überstehenden Dekorschicht an einem Rand des Werkstücks zwischen einer vom Werkstück beabstandeten Rückzugsposition und einer Umbugposition verstellbar ist, in welcher die überstehende Dekorschicht an die Rückseite des Randes angelegt ist und mindestens einer Linearantriebseinrichtung mit mindestens einer Schwenkantriebseinrichtung zum Verstellen des Umbugstempels relativ zum Werkstück, gemäß dem Oberbegriff des Anspruchs 1.

Die Erfindung betrifft weiterhin ein Verfahren zum Umbugen einer überstehenden flexiblen Dekorschicht an einem Werkstück, wobei das Werkstück in einer Halterung aufgenommen und gehalten wird und zum Umbugen der überstehenden Dekorschicht mindestens ein Umbugstempel zwischen einer von dem Werkstück beabstandeten Rückzugsposition in eine Umbugposition verstellt wird, in welcher die überstehende Dekorschicht an einen Rand des Werkstücks angelegt ist, gemäß dem Oberbegriff des Anspruchs 8.

Beim Umbugen ist es erforderlich, die überstehende Dekorschicht exakt über einen Rand des Werkstückes umzulegen, um so einen sauberen Randabschluss zu erreichen. Hierdurch wird einem Ablösen der Dekorschicht entgegengewirkt. Weiterhin erhöht sich die Wertanmutung eines Werkstückes mit Dekorschicht, was insbesondere für Bauteile für den Innenausbau von Kraftfahrzeugen gewünscht ist.

Zum Erreichen der komplexen Bewegung des Umbugstempels für ein Umbugen ist es bekannt, einen Umbugstempel durch mehrere Stellzylinder zu steuern. Allerdings ist die Anordnung von mehreren Stellzylindern je Umbugstempel mit einem relativ großen Platzbedarf verbunden. Dies erhöht den Aufwand für die Maschine und auch die Betriebskosten. Eine derartige Umbugvorrichtung ist beispielsweise aus der WO 99/43518 A1 bekannt.

Darüber hinaus kann das Umbugen auch auf einer Presse unter Verwendung von Keilschiebermechanismen durchgeführt werden, welche die Hubbewegung der Presse teilweise in eine seitliche Umlegbewegung umsetzen. Derartige Vorrichtungen gehen beispielsweise aus der DE 196 07 855 C1 oder der DE 20 2005 021 368 U1 oder der DE 10 2009 025 539 A1 hervor.

Weiterhin ist es aus der US 2011/274921 A1 bekannt, zum Umbugen Umbugstempel mit vertikal gerichteten Stellzylindern vorzusehen. Über eine L-förmige Kulissensteuerung wird dabei die lineare Hubbewegung des Stellzylinders in eine Umkantbewegung zum Umbugen der Dekorschicht übersetzt. Bereits kleinere Formänderungen des Produktes erfordern, die mechanische Kulissensteuerung aufwändig umzuarbeiten oder zu ersetzen.

Aus der DE 10 2013 201 921 A1 ist eine Umbugvorrichtung mit zwei Umbugschiebern bekannt, wobei zum Umbugen eines Eckbereiches einer Dekorschicht eine Falteinrichtung zum zusätzlichen Falten der Dekorschicht angeordnet ist.

Eine gattungsgemäße Vorrichtung und ein gattungsgemäßes Verfahren gehen aus FR 2 595 622 A1 hervor. Eine Dekorschicht an einer Möbelplatte wird durch zwei Schwenkhebel um eine Randkante umgelegt. Anschließend wird die Dekorschicht senkrecht zur Werkstückoberfläche mittels eines linear verfahrbaren Stempels angedrückt.

Bei der Vorrichtung nach der DE 197 06 712 A1 weist der Umbugstempel ein teilzylindrisches Drehwerkzeug auf, welches drehbar am Ende eines Kolbens angeordnet ist. Der Kolben ist Teil eines Stellzylinders, welcher linear verfahrbar ist. Durch eine etwa V-förmige Ausnehmung in dem zylindrischen Drehwerkzeug wird bei einem Betätigen des Stellzylinders die überstehende Dekorschicht erfasst und durch die lineare Vorschubbewegung zunächst in einem etwa 90°-Winkel um den Rand des Werkstücks umgelegt, wobei eine Flanke der Ausnehmung an dem Werkstückrand anschlägt. Durch weiteres axiales Ausfahren des Kolbens des Stellzylinders wird eine Drehung des Drehwerkzeuges bewirkt, wodurch der umgelegte Bereich der Dekorschicht an eine Innenseite des Randes des Werkstücks angedrückt wird. Zur Sicherstellung der Bewegung ist eine exakte Abstimmung der Anordnung des Werkstückrandes, der Drehachse des Drehwerkzeuges und der Verschieberichtung des Stellzylinders erforderlich.

Der Erfindung liegt die **Aufgabe** zugrunde, eine Vorrichtung und ein Verfahren zum Umbugen anzugeben, welche bei einem kompakten Aufbau ein zuverlässiges Umbugen ermöglichen.

Die Aufgabe wird zum einen durch eine Vorrichtung mit den Merkmalen des Anspruchs 1 und zum anderen durch ein Verfahren mit den Merkmalen des Anspruchs 8 gelöst. Bevorzugte Ausführungen der Erfindung sind in den jeweils abhängigen Ansprüchen angegeben.

Die erfindungsgemäße Vorrichtung zum Umbugen ist dadurch gekennzeichnet, dass durch die Schwenkantriebseinrichtung der Umbugstempel aus der Rückzugsposition in eine Zwischenposition verschwenkbar ist, in welcher die überstehende Dekorschicht über den Rand des Werkstücks umgelegt ist und dass der Umbugstempel aus der Zwischenposition durch die Linearantriebseinrichtung in die Umbugposition verfahrbar ist, in welcher die überstehende Dekorschicht an den Rand des Werkstücks angelegt ist.

Ein Grundgedanke der Erfindung liegt darin, den Umbugstempel zunächst in einer bogenförmigen Schwenkbewegung aus der Rückzugsposition in eine Zwischenposition zu verschwenken. Bei dieser Schwenkbewegung wird die überstehende Dekorschicht über den Rand des Werkstücks umgelegt. In einer nachfolgenden linearen Verfahrbewegung wird der Umbugstempel in die Umbugposition bewegt. Dabei überstreicht der Umbugstempel zumindest teilweise die überstehende Dekorschicht und presst diesen so an den Rand des Werkstückes an. Insbesondere kann bei dieser Vorgehensweise die umgebugte Dekorschicht um den Rand des Werkstückes herum gespannt werden, so dass der Bildung von Falten entgegengewirkt ist.

Eine bevorzugte Ausführungsvariante der Erfindung besteht darin, dass die Linearantriebseinrichtung und/oder die Schwenkantriebseinrichtung mit einem Druckfluid betätigbar sind. Das Druckfluid kann eine Hydraulikflüssigkeit oder vorzugsweise Druckluft sein. Eine Fluidrückführung kann dabei entfallen. Die Linearantriebseinrichtung kann dabei ein axial verfahrbarer Stellzylinder und die Schwenkantriebseinrichtung ein bogenförmiges, druckbeaufschlagtes Verstellelement sein.

Grundsätzlich können die beiden Antriebseinrichtungen getrennt voneinander ausgebildet sein. So kann die Schwenkantriebseinrichtung an dem Umbugstempel angeordnet sein, während die Linearantriebseirichtung der Halterung zugeordnet ist, so dass die Halterung linear auf den verschwenkten Umbugstempel zu verfahren wird. Eine vorteilhafte und besonders kompakte Ausgestaltung der Erfindung wird dadurch erreicht, dass die Schwenkeinrichtung zusammen mit der Linearantriebseinrichtung ausgebildet ist, welche einen Stellzylinder umfasst. Beide Antriebseinrichtungen können so integriert ausgebildet sein. Insbesondere kann ein linear verschiebbarer Stellzylinder vorgesehen sein, welcher durch entsprechende Ausnehmungen auch eine Schwenkbewegung vorzugsweise zwischen 0 und 180° durchführen kann. Alternativ kann auch eine Kulissenführung in dem Stellzylinder vorgesehen sein, durch welche eine Linearbewegung des Kolbens des Stellzylinders in eine Schwenkbewegung übersetzt wird.

Gemäß einer weiteren Ausführungsform der Erfindung ist es vorteilhaft, dass die Linearantriebseinrichtung einen verfahrbaren Kolben aufweist, an welchem die Schwenkantriebseinrichtung angeordnet ist. Die Schwenkantriebseinrichtung kann dabei eine Kulissensteuerung oder ein separater Schwenkmotor sein, welcher an dem Kolben des Stellzylinders der Linearantriebseinrichtung angebracht ist. Der Schwenkmotor kann dabei elektrisch betrieben sein.

Ein besonders gutes Umbugergebnis entlang von komplexen Werkstückkonturen kann nach einer Weiterbildung der Erfindung dadurch erreicht werden, dass mehrere Umbugstempel vorgesehen sind, welche jeweils eine Linearantriebseinrichtung und eine Schwenkantriebseinrichtung aufweisen. Hierdurch ist eine individuelle Ansteuerung der einzelnen Umbugstempel möglich. Dies erleichtert auch eine eventuelle Anpassung an Produktänderungen.

Ein besonders sauberes und faltenfreies Umbugen wird nach der Erfindung dadurch erreicht, dass eine Verschieberichtung der Linearantriebseinrichtung parallel zu dem Rand des Werkstücks gerichtet ist. Hierdurch wird ein Überstreichen der überstehenden Dekorschicht und damit ein Andrücken der Dekorschicht an eine Innenseite des Werkstückrandes ermöglicht. Bei Anordnung der Schwenkantriebseinrichtung ist die Schwenkachse parallel vorzugsweise koaxial zur Verschieberichtung der Linearantriebseinrichtung ausgebildet.

Eine besonders gute Anpassung an unterschiedliche Dekorschichten wird nach einer bevorzugten Ausführungsform der Erfindung dadurch bewirkt, dass der Umbugstempel ein Kontaktelement zum Kontaktieren der überstehenden Dekorschicht aufweist und dass das Kontaktelement auswechselbar an einem Stempelgrundkörper befestigt ist. Das Kontaktelement kann dabei insbesondere aus einem weicheren, vorzugsweise elastischen Material, etwa Gummi oder Schaumstoff gebildet sein. Hierdurch wird ein besonders schonendes und zugleich zuverlässiges Anpressen der Dekorschicht an das Werkstück erreicht. Durch eine Auswechselbarkeit, etwa durch eine Schraubverbindung mit dem Stempelgrundkörper, kann das Kontaktelement an unterschiedliche Materialien und Dimensionen effizient angepasst werden.

Das erfindungsgemäße Verfahren zum Umbugen ist dadurch gekennzeichnet, dass der Umbugstempel aus der Rückzugsposition mit einer Schwenkantriebseinrichtung in eine Zwischenposition verschwenkt wird, wobei die überstehende Dekorschicht über den Rand des Werkstücks umgelegt wird, und dass der Umbugstempel aus der Zwischenposition durch eine Linearantriebseinrichtung relativ zum Werkstück in die Umbugposition verfahren wird, wobei die überstehende Dekorschicht an dem Rand des Werkstücks angelegt wird.

Das erfindungsgemäße Verfahren kann insbesondere mit einem der zuvor beschriebenen Vorrichtungen zum Umbugen durchgeführt werden. Hierbei ergeben sich die zuvor beschriebenen Vorteile hinsichtlich eines sauberen und genauen Umbugens.

Eine bevorzugte Weiterbildung des erfindungsgemäßen Verfahrens besteht darin, dass mehrere Umbugstempel eingesetzt werden, welche jeweils mit einer Linearantriebseinrichtung und einer Schwenkantriebseinrichtung versehen sind. Hierdurch können eine Vielzahl von Umbugstempel individuell angesteuert werden, so dass auch bei komplexen Werkstückkonturen ein genaues Umbugen erreicht werden kann.

Nach der Erfindung ist es vorgesehen, dass der Umbugstempel beim Bewegen von der Zwischenposition in die Umbugposition etwa parallel zum Rand verfahren wird, wobei die überstehende Dekorschicht überstrichen wird. Bei diesem Überstreichen wird die Dekorschicht nicht nur an den Rand des Werkstücks angepresst, sondern gleichzeitig vom Rand weggespannt, so dass ein besonders sauberes und weitgehend faltenfreies Umbugen erreicht wird.

Gemäß einer Weiterbildung der Erfindung ist es vorgesehen, dass die angelegte Dekorschicht mit dem Rand fest verbunden wird. Die umgebugte und angelegte Dekorschicht kann dabei etwa durch eine vorher aufgebrachte Klebeschicht mit dem Rand verklebt werden.

Ein besonders effizientes Verbindungsverfahren besteht nach einer Weiterbildung der Erfindung darin, dass die Dekorschicht durch thermisches Verschweißen mit dem Rand verbunden wird. Dabei ist insbesondere der Umbugstempel mit einer elektrischen Heizeinrichtung versehen. Durch ein Ausbilden des Werkstückes und/oder der Dekorschicht aus einem thermoplastischen Material kann so ein thermisches Verschweißen und Befestigen der Dekorschicht an dem Rand erfolgen.

Die Erfindung wird nachfolgend anhand von bevorzugten Ausführungsformen der Erfindung beschrieben, welche anhand der beigefügten Zeichnungen beschrieben sind. In den Zeichnungen zeigen:
- Fig. 1: eine perspektivische Ansicht einer erfindungsgemäßen Vorrichtung zum Umbugen;
- Fig. 2: eine perspektivische Detailansicht von hinten der Umbugstempel der Vorrichtung von Fig. 1 in einer verschwenkten Zwischenposition;
- Fig. 3: eine perspektivische Ansicht von vorne der Umbugstempel von Fig. 2 beim Verfahren in die Umbugposition; und
- Fig. 4: eine perspektivische Ansicht der Umbugstempel von Fig. 3 nach Erreichen der Umbugposition.

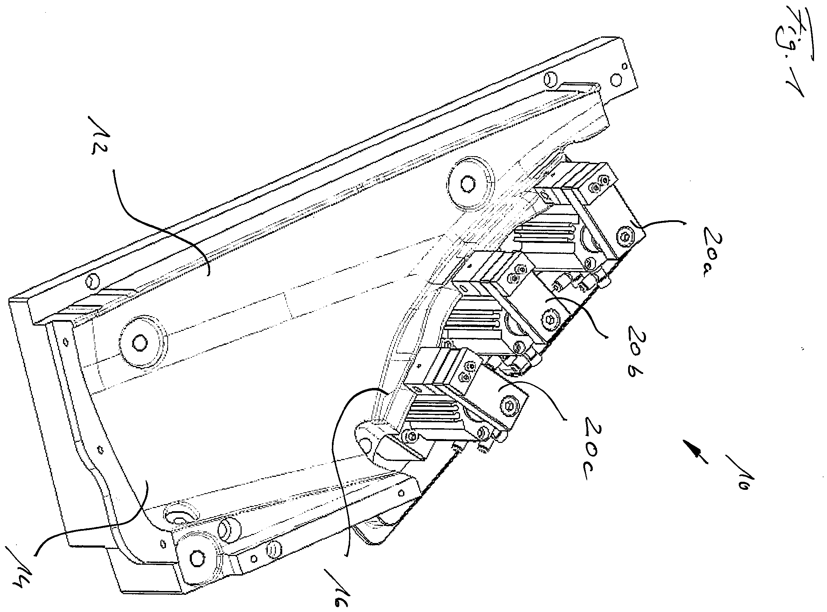

Gemäß der Fig. 1 weist eine erfindungsgemäße Vorrichtung 10 zum Umbugen eine Halterung 12 auf, welche eine Aufnahmefläche 14 umfasst. Die Aufnahmefläche 14 ist entsprechend der Kontur des nicht dargestellten Werkstücks ausgebildet. Entlang eines Randbereiches 16 der Halterung 12 ist ein Rand des Werkstücks mit einer vertikal nach oben vorstehenden flexiblen Dekorschicht angeordnet. Zum Umbugen dieser überstehenden Dekorschicht entlang des Randbereiches 16 der Halterung 12 sind drei Umbugstempel 20a, 20b und 20c vorgesehen und dargestellt. Entlang des weiteren Randbereiches 16 können weitere Umbugstempel 20 vorgesehen sein, welche aus Übersichtlichkeitsgründen in Fig. 1 nicht dargestellt sind.

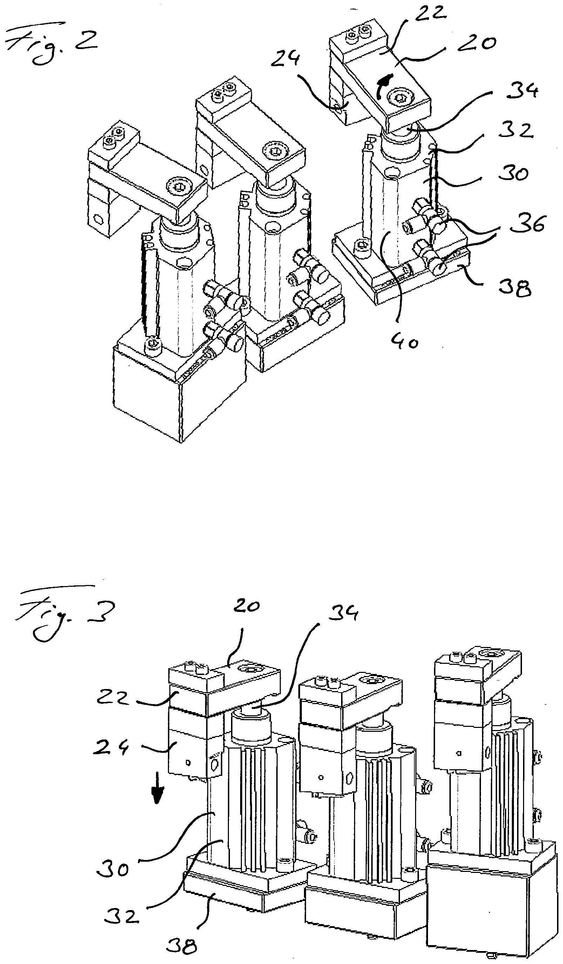

Der Funktionsablauf der einzelnen Umbugstempel 20 wird nachfolgend anhand eines einzelnen Umbugstempels 20 im Zusammenhang mit den Figuren 2 bis 4 erläutert.

Der Umbugstempel 20 ist etwa L-förmig ausgebildet und weist einen plattenförmigen, etwa horizontal angeordneten Stempelgrundkörper 22 auf. Der Stempelgrundkörper 22 ist an seinem proximalen Ende über eine Schraubverbindung rechtwinklig an einem vertikal gerichteten Kolben 34 eines Stellzylinders 32 einer Linearantriebseinrichtung 30 befestigt. An einem distalen Ende des Stempelgrundkörpers 22 ist ein quaderförmiges Kontaktelement 24 mittels Schraubverbindung befestigt. Das nach unten gerichtete Kontaktelement 24 ist zum Kontaktieren der überstehenden Dekorschicht ausgebildet und kann vorzugsweise ein weicheres Kunststoffmaterial aufweisen.

Der Umbugstempel 20 gemäß Fig. 2 ist in einer verschwenkten Zwischenposition dargestellt, wobei der Stempel 20 vorausgehend durch eine im Stellzylinder 32 integrierte Schwenkantriebseinrichtung 40 um etwa 90° im Uhrzeigersinn gemäß dem dargestellten Pfeil in die dargestellte verschwenkte Zwischenposition verschwenkt worden ist. Bei diesem Verschwenken des Umbugstempels 20 aus einer Rückzugsposition wird die etwa mit einem Betrag von 1 bis 2 cm überstehende und vertikal nach oben ragende Dekorschicht um etwa 90° in eine horizontale Position umgelegt. Diese Schwenkbewegung aus einer Rückzugsposition in eine um 90° verschwenkte Zwischenposition wird dabei gleichzeitig von allen Umbugstempeln 20 durchgeführt. Zur Betätigung der Schwenkantriebseinrichtung 40 sowie der Linearantriebseinrichtung 30 sind an einem Gehäuse des Stellzylinders 32 Anschlüsse 36 für Druckluft vorgesehen. Der Stellzylinder 32 ist zu einer Höheneinstellung an einem Sockel 38 befestigt, welcher wiederum an einer Grundplatte der Halterung 12 angebracht ist.

Von der in Fig. 2 dargestellten Zwischenposition wird der Umbugstempel 20 durch axiales Einfahren eines stangenförmigen Kolbens 34 des Stellzylinders 32 vertikal nach unten gefahren. Dabei wird die nicht dargestellte horizontal umgelegte Dekorschicht vertikal nach unten umgebogen und durch das vertikale Verfahren der Umbugstempel 20 durch das Kontaktelement 24 über den Rand des Werkstückes gespannt und gegen eine Innenseite des dünnwandigen Randes des Werkstückes gedrückt. Das vertikale Verfahren der Umbugstempel 20 in eine Verstellrichtung des Stellzylinders 32 ist in Fig. 3 durch einen Pfeil dargestellt. Dabei ist eine lineare Verfahrachse der Linearantriebseinrichtung 30 und eine Schwenkachse der Schwenkantriebseinrichtung 40 parallel und koaxial zueinander angeordnet. Die Schwenkachse entspricht der vertikalen Längsachse des Kolbens 34.

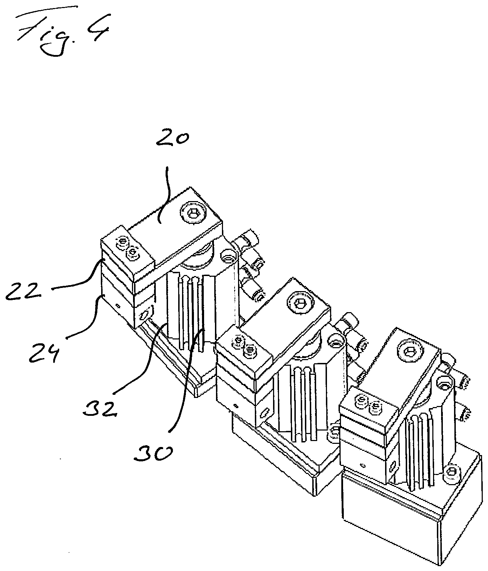

In Fig. 4 ist eine Endposition der Umbugstempel 20 dargestellt, bei welcher die Umbugstempel 20 durch Einfahren des Kolbens 34 in das Gehäuse des Stellzylinders 32 eine untere Endposition und damit die abschließende Umbugposition erreicht haben. In dieser abgeschlossenen Umbugposition kann durch ein thermisches Verschweißen, welches auch über die Umbugstempel 20 erfolgen kann, der umgebugte und angelegte Rand der Dekorschicht an der Innenseite des Werkstückrandes befestigt werden.

Nach Abschluss des Umbugens werden die Umbugstempel 20 wieder nach oben in die Zwischenposition gemäß Fig. 2 verfahren und anschließend entgegen dem Uhrzeigersinn um etwa 90° in die Rückzugsposition verschwenkt. Wenn sich die Umbugstempel 20 in der Rückzugsposition befinden, kann das Werkstück mit der umgebugten Dekorschicht entnommen und ein neues umzubugendes Werkstück eingelegt werden.

## Patentansprüche

1. Vorrichtung zum Umbugen einer überstehenden flexiblen Dekorschicht an einem Werkstück, mit
- einer Halterung (12) zum Aufnehmen und Halten des Werkstücks,
- mindestens einem Umbugstempel (20), welcher zum Umbugen der überstehenden Dekorschicht an einem Rand des Werkstücks zwischen einer vom Werkstück beabstandeten Rückzugsposition und einer Umbugposition verstellbar ist, in welcher die überstehende Dekorschicht an die Rückseite des Randes angelegt ist, und
- mindestens einer Linearantriebseinrichtung (30) und mindestens einer Schwenkantriebseinrichtung (40) zum Verstellen des Umbugstempels (20) relativ zum Werkstück,
- wobei durch die Schwenkantriebseinrichtung (40) der Umbugstempel (20) aus der Rückzugsposition um eine Schwenkachse in eine Zwischenposition verschwenkbar ist, in welcher die überstehende Dekorschicht über den Rand des Werkstücks umgelegt ist,
**dadurch gekennzeichnet,**
- **dass** der Umbugstempel (20) aus der Zwischenposition durch die Linearantriebseinrichtung in einer Verschieberichtung, welche parallel zur Schwenkachse ist, in die Umbugposition verfahrbar ist, in welcher die überstehende Dekorschicht an den Rand des Werkstücks angelegt ist, und
- **dass** die Verschieberichtung der Linearantriebseinrichtung (30) zum Überstreichen und Andrücken der überstehenden Dekorschicht parallel zu dem Rand des Werkstücks gerichtet ist.

2. Vorrichtung nach Anspruch 1,
**dadurch gekennzeichnet,**
**dass** die Linearantriebseinrichtung (30) und/oder die Schwenkantriebseinrichtung (40) mit einem Druckfluid betätigbar sind.

3. Vorrichtung nach Anspruch 1 oder 2,
**dadurch gekennzeichnet,**
**dass** die Schwenkantriebseinrichtung (40) zusammen mit der Linearantriebseinrichtung (30) ausgebildet ist, welche einen Stellzylinder (32) umfasst.

4. Vorrichtung nach einem der Ansprüche 1 bis 3,
**dadurch gekennzeichnet,**
**dass** die Linearantriebseinrichtung (30) einen verfahrbaren Kolben (34) aufweist, an welchem die Schwenkantriebseinrichtung (40) angeordnet ist.

5. Vorrichtung nach einem der Ansprüche 1 bis 4,
**dadurch gekennzeichnet,**
**dass** mehrere Umbugstempel (20) vorgesehen sind, welche jeweils eine Linearantriebseinrichtung (30) und eine Schwenkantriebseinrichtung (40) aufweisen.

6. Vorrichtung nach einem der Ansprüche 1 bis 5,
**dadurch gekennzeichnet,**
**dass** die Schwenkachse der Schwenkantriebseinrichtung (40) koaxial zur Verschieberichtung der Linearantriebseinrichtung (30) ist.

7. Vorrichtung nach einem der Ansprüche 1 bis 6,
**dadurch gekennzeichnet,**
**dass** der Umbugstempel (20) ein Kontaktelement (24) zum Kontaktieren der überstehenden Dekorschicht aufweist und
**dass** das Kontaktelement (24) auswechselbar an einem Stempelgrundkörper (22) befestigt ist.

8. Verfahren zum Umbugen einer überstehenden flexiblen Dekorschicht an einem Werkstück, insbesondere mit einer Vorrichtung (10) nach einem der Ansprüche 1 bis 7, wobei
- das Werkstück in einer Halterung (12) aufgenommen und gehalten wird,
- zum Umbugen der überstehenden Dekorschicht mindestens ein Umbugstempel (20) zwischen einer von dem Werkstück beabstandeten Rückzugsposition in eine Umbugposition verstellt wird, in welcher die überstehende Dekorschicht an einen Rand des Werkstücks angelegt ist, und
- der Umbugstempel (20) aus der Rückzugsposition mit einer Schwenkantriebseinrichtung (40) um eine Schwenkachse in eine Zwischenposition verschwenkt wird, wobei die überstehende Dekorschicht über den Rand des Werkstücks umgelegt wird,
**dadurch gekennzeichnet,**
- **dass** der Umbugstempel (20) aus der Zwischenposition durch eine Linearantriebseinrichtung (30) in einer Verschiebeeinrichtung, welche parallel zur Schwenkachse ist, in die Umbugposition relativ zum Werkstück verfahren wird, und
- **dass** der Umbugstempel (20) beim Bewegen von der Zwischenposition in die Umbugposition etwa parallel zum Rand verfahren wird, wobei die überstehende Dekorschicht überstrichen und an den Rand des Werkstücks angelegt wird.

9. Verfahren nach Anspruch 8,
**dadurch gekennzeichnet,**
**dass** mehrere Umbugstempel (20) eingesetzt werden, welche jeweils mit einer Linearantriebseinrichtung (30) und einer Schwenkantriebseinrichtung (40) versehen sind.

10. Verfahren nach Anspruch 8 oder 9,
**dadurch gekennzeichnet,**
**dass** die angelegte Dekorschicht mit dem Rand fest verbunden wird.

11. Verfahren nach Anspruch 10,
**dadurch gekennzeichnet,**
**dass** die Dekorschicht durch thermisches Verschweißen mit dem Rand verbunden wird.

## Claims

1. A device for folding over an edge of a protruding flexible decorative layer on a workpiece comprising
- a holder (12) for receiving and holding the workpiece,
- at least one edge-folding stamp (20), which, for the purpose of folding over protruding decorative layer on an edge of the workpiece, is adjustable between a retracted position, which is at a distance from the workpiece, and an edge-folding position, in which the protruding decorative layer is placed against the rear side of the edge, and
- at least one linear drive means (30) and at least one pivot drive means (40) for adjusting the edge-folding stamp (20) in relation to the workpiece,
- wherein, by way of the pivot drive means (40), the edge-folding stamp (20) is able to be pivoted around a pivot axis from the retracted position into an intermediate position, in which the protruding decorative layer is folded across the edge of the workpiece,
**characterized in that**
- the edge-folding stamp (20), by way of the linear drive means, is movable in a direction of displacement, which is parallel to the pivot axis, from the intermediate position into the edge-folding position, in which the protruding decorative layer is placed against the edge of the workpiece, and
- that, for the purpose of sweeping across the protruding decorative layer and pressing it against the workpiece, the direction of displacement of the linear drive means (30) is oriented parallel to the edge of the workpiece.

2. The device according to claim 1,
**characterized in that**
the linear drive means (30) and/or the pivot drive means (40) can be actuated using a pressurized fluid.

3. The device according to claim 1 or 2,
**characterized in that**
the pivot drive means (40) is constructed to be integral with the linear drive means (30), which comprises a positioning cylinder (32).

4. The device according to any of claims 1 to 3,
**characterized in that**
the linear drive means (30) features a movable piston (34), upon which the pivot drive means (40) is arranged.

5. The device according to any of claims 1 to 4,
**characterized in that**
multiple edge-folding stamps (20) are provided, each of which features a linear drive means (30) and a pivot drive means (40).

6. The device according to any of claims 1 to 5,
**characterized in that**
the pivot axis of the pivot drive means (40) is coaxial with the direction of displacement of the linear drive means (30).

7. The device according to any of claims 1 to 6,
**characterized in that**
the edge-folding stamp (20) features a contact element (24) for contacting the protruding decorative layer, and
that the contact element (24) is attached in a detachable way to a stamp main body (22).

8. A method for folding over an edge of a protruding flexible decorative layer on a workpiece, in particular using a device (10) according to any of claims 1 to 7, wherein,
- the workpiece is received and held by a holder (12);
- for the purpose of folding over the protruding decorative layer, at least one edge-folding stamp (20) is adjusted between a retracted position, which is at a distance from the workpiece, and an edge-folding position, in which the protruding decorative layer is placed against an edge of the workpiece, and;
- using the pivot drive means (40), the edge-folding stamp (20) is pivoted around a pivot axis from the retracted position into an intermediate position, wherein the protruding decorative layer is folded across the edge of the workpiece,
**characterized in that**,
- by way of a linear drive means (30), the edge-folding stamp (20) is moved in relation to the workpiece into the edge-folding position in a direction of displacement which is parallel to the pivot axis, and
- that, in traveling from the intermediate position to the edge-folding position, the edge-folding stamp (20) is moved in a direction approximately parallel to the edge, wherein the protruding decorative layer is swept across and placed against the edge of the workpiece.

9. The method according to claim 8,
**characterized in that**,
multiple edge-folding stamps (20) are employed, each of which is furnished with a linear drive means (30) and a pivot drive means (40).

10. The method according to claim 8 or 9,
**characterized in that**
the placed against decorative layer is firmly attached to the edge.

11. The method according to claim 10,
**characterized in that**,
the decorative layer is attached to the edge by way of thermal bonding.

## Revendications

1. Dispositif de rembordement d'une couche décorative flexible qui dépasse au niveau d'une pièce, comportant
- une fixation (12) servant à recevoir et à maintenir la pièce,
- au moins une matrice de rembordement (20), qui peut être ajustée afin de remborder la couche décorative qui dépasse au niveau d'un bord de la pièce entre une position en retrait espacée de la pièce et une position de rembordement, dans laquelle la couche décorative qui dépasse est placée contre le côté arrière du bord, et
- au moins un système d'entraînement linéaire (30) et au moins un système d'entraînement par pivotement (40) servant à ajuster la matrice de rembordement (20) par rapport à la pièce,
- dans lequel le système d'entraînement par pivotement (40) permet de faire pivoter la matrice de rembordement (20) depuis la position de retrait autour d'un axe pivotement dans une position intermédiaire, dans laquelle la couche décorative qui dépasse est repliée par-dessus le bord de la pièce,
**caractérisé**
- **en ce que** la matrice de rembordement (20) peut être déplacée depuis la position intermédiaire par le système d'entraînement linéaire dans une direction de coulissement, qui est parallèle à l'axe de pivotement, dans la position de rembordement, dans laquelle la couche décorative qui dépasse est placée contre le bord de la pièce, et
- **en ce que** la direction de coulissement du système d'entraînement linéaire (30) est dirigée de manière parallèle par rapport au bord de la pièce afin de balayer et d'appliquer par pression la couche décorative qui dépasse.

2. Dispositif selon la revendication 1,
**caractérisé**
**en ce que** le système d'entraînement linéaire (30) et/ou le système d'entraînement par pivotement (40) peuvent être actionnés avec un fluide sous pression.

3. Dispositif selon la revendication 1 ou 2,
**caractérisé**
**en ce que** le système d'entraînement par pivotement (40) est réalisé conjointement avec le système d'entraînement linéaire (30), qui présente un vérin (32).

4. Dispositif selon l'une quelconque des revendications 1 à 3,
**caractérisé**
**en ce que** le système d'entraînement linéaire (30) présente un piston (34) pouvant être déplacé, au niveau duquel le système d'entraînement par pivotement (40) est disposé.

5. Dispositif selon l'une quelconque des revendications 1 à 4,
**caractérisé**
**en ce que** sont prévues plusieurs matrices de rembordement (20), qui présentent respectivement un système d'entraînement linéaire (30) et un système d'entraînement par pivotement (40).

6. Dispositif selon l'une quelconque des revendications 1 à 5,
**caractérisé**
**en ce que** l'axe de pivotement du système d'entraînement par pivotement (40) est coaxial par rapport à la direction de coulissement du système d'entraînement linéaire (30).

7. Dispositif selon l'une quelconque des revendications 1 à 6,
**caractérisé**
**en ce que** la matrice de rembordement (20) présente un élément de contact (24) servant à établir un contact avec la couche décorative qui dépasse, et
**en ce que** l'élément de contact (24) est fixé de manière interchangeable au niveau d'un corps de base de matrice (22).

8. Procédé de rembordement d'une couche décorative flexible qui dépasse au niveau d'une pièce, en particulier avec un dispositif (10) selon l'une quelconque des revendications 1 à 7, dans lequel
- la pièce est logée et maintenue dans une fixation (12),
- afin de remborder la couche décorative qui dépasse, au moins une matrice de rembordement (20) est ajustée entre une position de retrait espacée de la pièce et une position de rembordement, dans laquelle la couche décorative qui dépasse est placée contre un bord de la pièce, et
- la matrice de rembordement (20) est pivotée depuis la position de retrait avec un système d'entraînement par pivotement (40) autour d'un axe de pivotement dans une position intermédiaire, dans lequel la couche décorative qui dépasse est repliée par-dessus le bord de la pièce,
**caractérisé**
- **en ce que** la matrice de rembordement (20) est déplacée depuis la position intermédiaire par un système d'entraînement linéaire (30) dans une direction de coulissement, qui est parallèle à l'axe de pivotement, dans la position de rembordement par rapport à la pièce, et
- **en ce que** la matrice de rembordement (20) est déplacée, lors du déplacement depuis la position intermédiaire dans la position de rembordement, à peu près de manière parallèle par rapport au bord, dans lequel la couche décorative qui dépasse est balayée et est placée contre le bord de la pièce.

9. Procédé selon la revendication 8,
**caractérisé**
**en ce que** plusieurs matrices de rembordement (20) sont utilisées, lesquelles sont pourvues respectivement d'un système d'entraînement linéaire (30) et d'un système d'entraînement par pivotement (40).

10. Procédé selon la revendication 8 ou 9,
**caractérisé**
**en ce que** la couche décorative placée est reliée de manière solidaire au bord.

11. Procédé selon la revendication 10,
**caractérisé**
**en ce que** la couche décorative est reliée au bord par un soudage thermique.
